# EUROPÄISCHE PATENTSCHRIFT

(11) **EP 1 655 524 B1**
(45) Veröffentlichungstag und Bekanntmachung des Hinweises auf die Patenterteilung: **09.01.2008**
(21) Anmeldenummer: 04026239.6
(22) Anmeldetag: 05.11.2004
(51) Int. Cl.: F16J 15/32, G01P 3/44

(54) **Dichtung**
Sealing
Joint d'étanchéité

(43) Veröffentlichungstag der Anmeldung: 10.05.2006
(73) Patentinhaber: Carl Freudenberg KG, 69469 Weinheim (DE)
(72) Erfinder: Lutaud, Dominique, 52360 Orbigny au Mont (FR)

(56) Entgegenhaltungen:
- EP-A- 0 743 526
- EP-A- 1 304 575
- US-B1- 6 561 518

## Beschreibung

### Technisches Gebiet

Die Erfindung betrifft eine Dichteinheit, umfassend einen Sensor und einen Tragring mit zumindest einer innenumfangsseitig am Tragring festgelegten Dichtlippe, wobei an dem Tragring materialeinheitlich und einstückig eine Sensorhalterung zur Aufnahme eines Sensors angeordnet ist, wobei die Sensorhalterung zumindest eine Durchbrechung zur Aufnahme des Sensors aufweist.

### Stand der Technik

Derartige Dichtungen sind aus der DE 200 00 694 U1 bekannt. Die vorbekannte Dichtung umfasst einen Dichtflansch mit dynamisch und statisch dichtenden Dichtungselementen. Der Dichtflansch weist zur Befestigung von Funktionselementen, beispielsweise Sensoren, Federelemente auf, die fest mit dem Dichtflansch verbunden sind. Die Federelemente greifen zur Festlegung der Funktionselemente in korrespondierende Ausnehmungen am Funktionselement ein.

Aus der US 6,561,518 B1 ist eine Dichteinheit bekannt, bei der ein Sensor in einer Durchbrechung angeordnet ist, wobei die Durchbrechung in einem Axialflansch des Tragrings der Dichteinheit angeordnet ist.

Aus der EP 0 743 526 A1 ist eine Messvorrichtung mit einem Sensor zur Messung von Relativgeschwindigkeiten von Lagerschalen bekannt, bei der der Sensor ein Federelement zur vediersicheren Befestigung aufweist.

### Darstellung der Erfindung

Der Erfindung liegt die Aufgabe zugrunde, eine Dichteinheit bereitzustellen, die einfach und kostengünstig herstellbar ist und an der mit einfachen Mitteln ein Sensor befestigt werden kann.

Die Aufgabe wird mit den Merkmalen von Anspruch 1 gelöst. Auf vorteilhafte Ausgestaltungen nehmen die Unteransprüche Bezug.

Zur Lösung der Aufgabe weist der Sensor zur lösbaren Befestigung in der Sensorhalterung zumindest ein Federelement auf, das in der Durchbrechung der Sensorhaiterung einrastbar ist und die Sensorhalterung weist drei nebeneinander angeordnete Durchbrechungen auf, wobei die erste Durchbrechung die Aufnahme für den Sensor bildet und die zweite und die dritte Durchbrechung die Aufnahmen für die Federelemente des Sensors bilden, wobei die erste Durchbrechung zwischen der zweiten und der dritten Durchbrechung angeordnet ist.

Eine Durchbrechung kann einfach und kostengünstig in dem Tragring vorgesehen werden, wodurch die Herstellung der Dichtung einfach und kostengünstig ist. Die Montage des Sensors ist besonders einfach, da der Sensor lediglich in die Durchbrechung eingesteckt wird und durch die Federelemente, die in ebenfalls in der Durchbrechung einrasten, eine verliersichere Befestigung erreicht wird. Durch die Federelemente ergibt sich zudem eine spielfreie Verbindung zwischen Sensor und Tragring, wodurch sich die Messgenauigkeit des System bestehend aus einem Encoder, der abzudichtenden Welle, der Dichtung und dem an der Dichtung befestigten Sensor erhöht. Durch die lösbare Befestigung des Sensors ist ein nachträgliches Austauschen des Sensors möglich, beispielsweise wenn der Sensor vorzeitig verschleißt. Die Montage erfolgt sehr einfach und die Verwendung von Spezialwerkzeug wird vermieden, da der Sensor lediglich in die Durchbrechung eingesteckt wird. Dadurch ist der Sensor auch in schwierig zu erreichende Dichtungen einfach montierbar. Die Verbindung ist besonders sicher, da der Sensor hörbar einrastet wenn das Federelement hinter der Hinterschneidung der Durchbrechung einrastet. Durch die zusätzliche Durchbrechung für ein weiteres Federelement wird die Befestigung des Sensors, insbesondere die Kippstabilftät, nochmals verbessert.

Der Tragring kann aus einem metallischen Werkstoff gebildet sein. Metallische Werkstoffe weisen eine hohe Festigkeit auf und sind kostengünstig. Sie lassen sich leicht umformen.

Der Tragring kann ein Stanzteil sein. Gestanzte Tragringe sind mit wenigen Herstellungsschritten und in großen Stückzahlen kostengünstig und einfach herstellbar. Zum Stanzen sind Halbzeuge aus metallischen Werkstoffen besonders geeignet.

Das Federelement kann durch eine Federklammer gebildet sein. Federklammern sind einfach und kostengünstig herstellbar. Mit Federklammer können sichere und einfach montierbare Verbindungen hergestellt werden. Federklammern können mit einfachen Mitteln am Sensor befestigt werden.

Die Federklammer kann aus einem metallischen Werkstoff gebildet sein. Die Federklammer kann beispielsweise aus Federstahl gefertigt sein. Mittels einer Federklammer aus Federstahl kann eine hohe Federkraft erreicht werden, aus der dann entsprechend hohe Haltekräfte resultieren. Aus der hohen Haltekraft ergibt sich dann ein besonders spielfreie Verbindung von Tragring und Sensor.

Das Federelement kann durch einen Schnapphaken aus polymerem Werkstoff gebildet sein. Schnapphaken sind kostengünstig und einfach herstellbar.

Der Schnapphaken kann materialeinheitlich und einstückig mit dem Sensor ausgebildet sein. Dadurch kann die Herstellung von Sensor und Schnapphaken kostengünstig in einem Herstellungsschritt erfolgen.

Der Tragring kann einen ersten Axialschenkel und einen sich von der freien Stirnseite des ersten Axialschenkels radial nach außen erstreckenden Radialvorsprung aufweisen, der auf der dem ersten Axialschenkel axial abgewandten Seite einen zweiten Axialschenkel aufweisen kann, wobei an dem zweiten Axialschenkel die Sensorhalterung angeordnet ist. Der Radialvorsprung vereinfacht die Montage der Dichtung, da der Radialvorsprung als Anschlag dient. Die Aufnahme von Sensoren mit einer großen radialen Erstreckung wird ebenfalls ermöglicht.

### Kurzbeschreibung der Zeichnung

Einige Ausführungsbeispiele der erfindungsgemäßen Dichtung werden nachfolgend anhand der Figuren näher erläutert. Es zeigen, jeweils in schematischer Darstellung:
- Fig. 1: eine erfindungsgemäße Dichtung;

- Fig. 2: einen Sensor mit einer Federklammer;
- Fig. 3: einen Sensor mit einem Schnapphaken;
- Fig. 4: eine Sensorhalterung mit zwei Durchbrechungen in der Draufsicht;
- Fig. 5: eine Sensorhalterung mit drei Durchbrechungen in der Draufsicht;
- Fig. 6: eine erfindungsgemäße Dichtungsanordnung aus einem Kunststoff;
- Fig. 7: eine erfindungsgemäße Dichtungsanordnung, wobei das Federelement durch eine Schraubendruckfeder gebildet ist.

### Ausführung der Erfindung

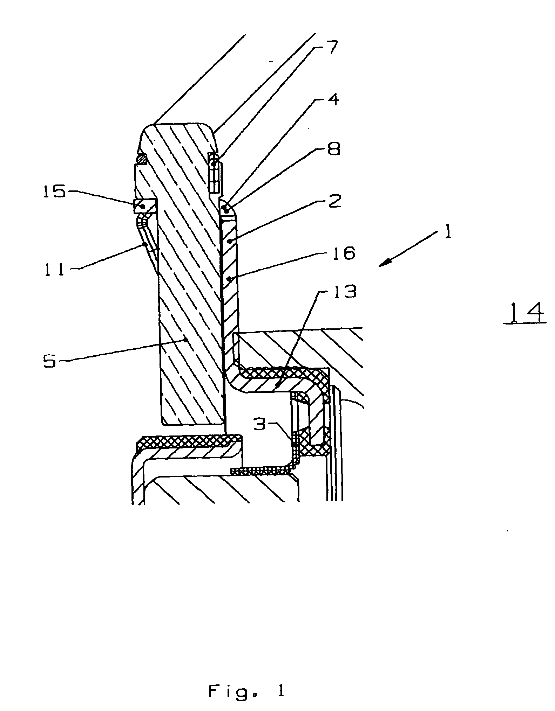

Figur 1 zeigt eine Dichtung 1 mit einem Tragring 2, an dem innenumfangsseitig eine dynamisch beanspruchte Dichtlippe 3 festgelegt ist. In dieser Ausführung ist die Dichtlippe 3 aus PTFE gebildet und mit ihren freien Ende entgegen der Richtung des abzudichtenden Raums 14 vorgestreckt. Der Tragring 2 weist einen ersten Axialschenkel 13 auf an dessen freier Stirnseite ein sich radial nach außen erstreckender Radialvorsprung 16 angeordnet ist. Auf der dem ersten Axialschenkel 13 axial abgewandten Seite des Radialvorsprungs 16 ist ein zweiter Axialschenkel 15 angeordnet. An dem zweiten Axialschenkel 15 ist die Sensorhalterung 4 angeordnet. Die Sensorhalterung 4 ist materialeinheitlich und einstückig am Tragring 2 ausgebildet und weist zur Aufnahme eines Sensors 5 eine Durchbrechung 8 auf. Der Sensor 5 wiederum weist zur lösbaren Befestigung in der Durchbrechung 8 der Sensorhalterung 4 ein Federelement 7 auf. Das Federelement 7 ist als Federklammer 11 ausgebildet und aus Federstahl gefertigt. Zur Befestigung des Sensors 5 rastet das Federelement 7 hörbar in der Durchbrechung ein. Der Tragring 2 besteht aus einem metallischen Werkstoff und ist im Stanzverfahren hergestellt.

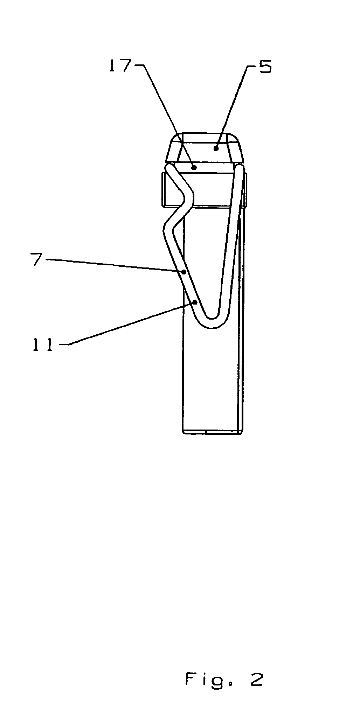

Figur 2 zeigt einen Sensor 5 mit einem Federelement 7. Das Federelement 7 ist in dieser Ausführung durch eine Federklammer 11 gebildet und besteht aus Federstahl. Die Federklammer 11 ist in einer Nut 17 angeordnet die sich zumindest teilweise ringförmig um den Sensor 5 erstreckt.

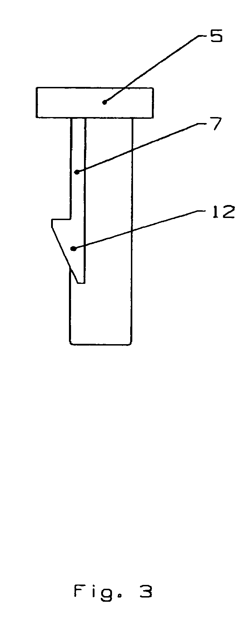

Figur 3 zeigt eine andere Ausführung eines Sensors 5 mit einem Federelement 7. Das Federelement 7 ist in dieser Ausführung durch einen Schnapphaken 12 gebildet und besteht aus einem polymerem Werkstoff. Der Schnapphaken ist in dieser Ausführung einstückig und materialeinheitlich mit dem Sensor 5 ausgebildet.

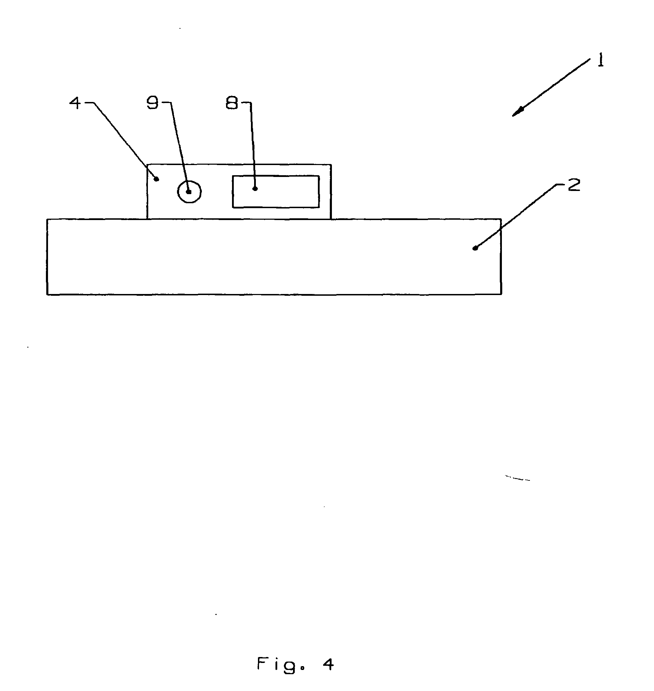

Figur 4 zeigt einen Tragring 2 mit einer Sensorhalterung 4. In dieser Ausführung weist die Sensorhalterung 4 zwei Durchbrechungen 8, 9 auf. Dabei bildet die erste Durchbrechung 8 die Aufnahme für den Sensor 5 und die zweite Durchbrechung 9 bildet die Aufnahme für das Federelement 7 des Sensors 5.

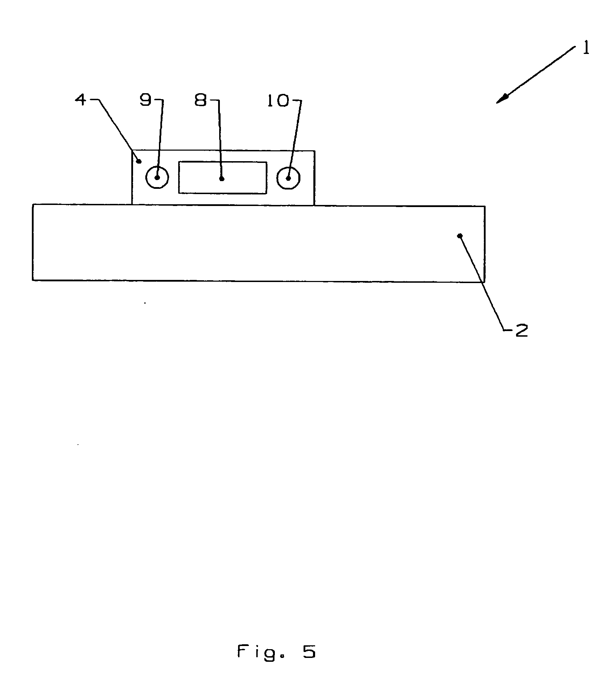

Figur 5 zeigt eine andere Ausgestaltung eines Tragrings 2 mit der erfindungsgemäßen Sensorhalterung 4. In dieser Ausführung weist die Sensorhalterung 4 drei nebeneinander angeordnete Durchbrechungen 8, 9, 10 auf. Dabei bildet die erste Durchbrechung 8 die Aufnahme für den Sensor 5 und die zweite und die dritte Durchbrechung 9 ,10 bilden die Aufnahme für die Federelemente 7 des Sensors 5. Die erste Durchbrechung 8 ist zwischen der zweiten und der dritten Durchbrechung 9, 10 angeordnet.

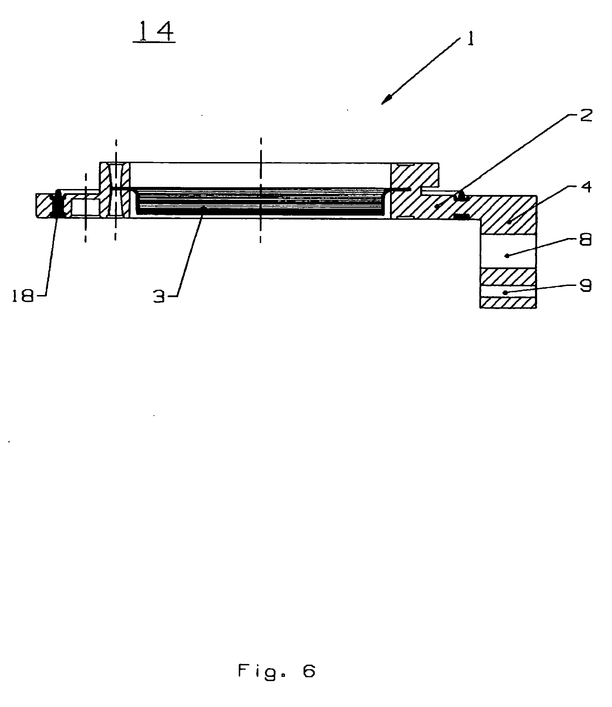

Figur 6 zeigt eine weitere Ausgestaltung eines Tragrings 2 mit der erfindungsgemäßen Sensorhalterung 4. In dieser Ausführung sind der Tragring 2 und die Sensorhalterung 4 einstückig und materialeinheitlich aus einem Kunststoff gegossen oder gespritzt. Der Tragring 2 hat die Gestalt eines Gehäuseverschlussdeckels und trägt außer der Dichtlippe 3 eine statisch wirkende Dichtung 18. Die Durchbrechung 8 ist für die Aufnahme eines Sensors 5 und die Durchbrechung 9 für die Aufnahme einer Federklammer 11 vorgesehen.

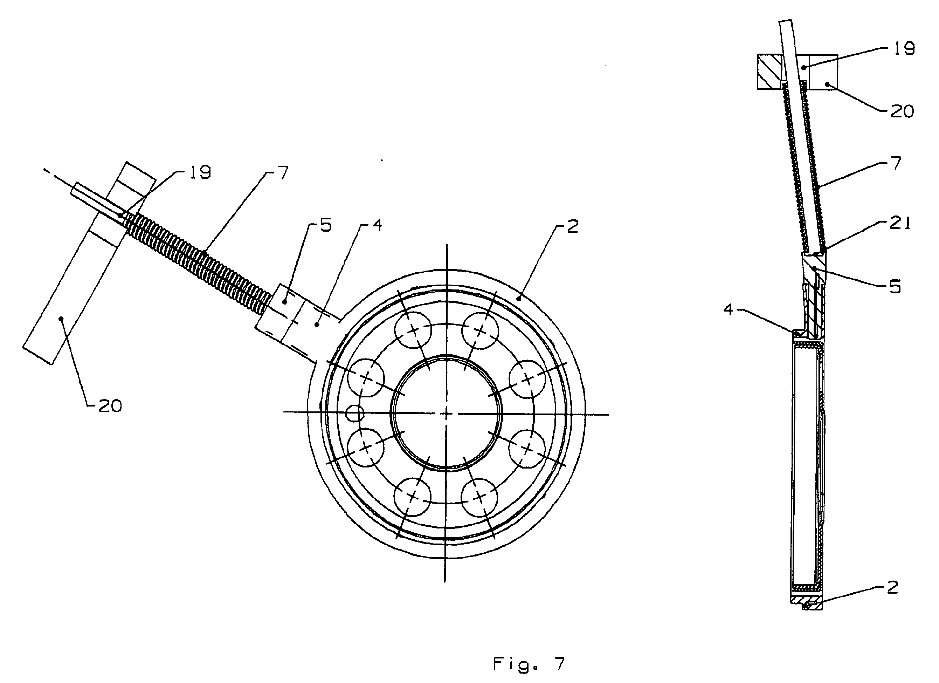

Figur 7 zeigt eine weitere Ausgestaltung eines Tragrings 2 mit der erfindungsgemäßen Sensorhalterung 4. in dieser Ausführung sind der Tragring 2 und die Sensorhalterung 4einstückig und materialeinheitlich gestaltet. Das Federelement ist durch eine Schraubendruckfeder gebildet. Diese ist einerseits in einer Ausnehmung 21 am Sensor 5 und andererseits in einer Durchbrechung 19 eines benachbarten Bauteils 20 einrastbar. Dadurch ist der Sensor 5 verliersicher in die Sensorhalterung gedrückt. Die Schraubendruckfeder schützt gleichzeitig die elektrischen Leitungen vor mechanischen Verletzungen.

## Patentansprüche

1. Dichteinheit (1), umfassend einen Sensor (5) und einen Tragring (2) mit zumindest einer innenumfangsseitig am Tragring (2) festgelegten Dichtlippe (3), wobei an dem Tragring (2) materialeinheitlich und einstückig eine Sensorhalterung (4) zur Aufnahme des Sensors (5) angeordnet ist, wobei die Sensorhalterung (4) zumindest eine Durchbrechung (8) zur Aufnahme des Sensors (5) aufweist, **dadurch gekennzeichnet, dass** der Sensor (5) zur lösbaren Befestigung in der Sensorhalterung (4) zumindest ein Federelement (7) aufweist, welches den Sensor verliersicher in der Sensorhalterung (4) fixiert und dass die Sensorhalterung (4) drei nebeneinander angeordnete Durchbrechungen (8, 9, 10) aufweist, wobei die erste Durchbrechung (8) die Aufnahme für den Sensor (5) bildet und die zweite und die dritte Durchbrechung (9 ,10) die Aufnahme für die Federelemente (7) des Sensors (5) bildet, wobei die erste Durchbrechung (8) zwischen der zweiten und der dritten Durchbrechung (9, 10) angeordnet ist.

2. Dichteinheit nach Anspruch 1, **dadurch gekennzeichnet, dass** das Federelement in der Durchbrechung (8) der Sensorhalterung (4) einrastbar ist.

3. Dichteinheit nach Anspruch 1 oder 2, **dadurch gekennzeichnet, dass** der Tragring (2) aus einem metallischen Werkstoff gebildet ist.

4. Dichteinheit nach einem der Ansprüche 1 bis 3, **dadurch gekennzeichnet, dass** der Tragring (2) ein Stanzteil ist.

5. Dichteinheit nach einem der Ansprüche 1 bis 4, **dadurch gekennzeichnet, dass** das Federelement (7) durch eine Federklammer (11) gebildet ist

6. Dichteinheit nach Anspruch 5, **dadurch gekennzeichnet, dass** die Federklammer (11) aus einem metallischen Werkstoff gebildet ist.

7. Dichteinheit nach einem der Ansprüche 1 bis 4, **dadurch gekennzeichnet, dass** das Federelement (7) durch einen Schnapphaken (12) aus polymerem Werkstoff gebildet ist.

8. Dichteinheit nach Anspruch 7, **dadurch gekennzeichnet, dass** der Schnapphaken (12) materialeinheitlich und einstückig mit dem Sensor (5) ausgebildet ist.

9. Dichteinheit nach einem der Ansprüche 1 bis 8, **dadurch gekennzeichnet, dass** der Tragring (2) einen ersten Axialschenkel (13) und einen sich von der freien Stirnseite des ersten Axialschenkels (13) radial nach außen erstreckenden Radialvorsprung (16) aufweist, der auf der dem ersten Axialschenkel (13) axial abgewandten Seite einen zweiten Axialschenkel (15) aufweist, wobei an dem zweiten Axialschenkel (15) die Sensorhalterung (4) angeordnet ist.

## Claims

1. Sealing unit (1), comprising a sensor (5) and a bearing ring (2) having at least one sealing lip (3) which is fixed to the bearing ring (2) on the inner circumferential side, a sensor holder (4) for receiving the sensor (5) being arranged on the bearing ring (2) in an integral manner and formed from the same material, the sensor holder (4) having at least one aperture (8) for receiving the sensor (5), **characterized in that** the sensor (5) has at least one spring element (7) for releasable fastening in the sensor holder (4), which at least one spring element (7) fixes the sensor captively in the sensor holder (4), and **in that** the sensor holder (4) has three apertures (8, 9, 10) which are arranged next to one another, the first aperture (8) forming the receptacle for the sensor (5) and the second and third apertures (9, 10) forming the receptacle for the spring elements (7) of the sensor (5), the first aperture (8) being arranged between the second and third apertures (9, 10).

2. Sealing unit according to Claim 1, **characterized in that** the spring element can be latched in the aperture (8) of the sensor holder (4).

3. Sealing unit according to Claim 1 or 2, **characterized in that** the bearing ring (2) is formed from a metallic material.

4. Sealing unit according to one of Claims 1 to 3, **characterized in that** the bearing ring (2) is a punched part.

5. Sealing unit according to one of Claims 1 to 4, **characterized in that** the spring element (7) is formed by a spring clamp (11).

6. Sealing unit according to Claim 5, **characterized in that** the spring clamp (11) is formed from a metallic material.

7. Sealing unit according to one of Claims 1 to 4, **characterized in that** the spring element (7) is formed by a snap-in hook (12) made from polymeric material.

8. Sealing unit according to Claim 7, **characterized in that** the snap-in hook (12) is configured from the same material as and in one piece with the sensor (5).

9. Sealing unit according to one of Claims 1 to 8, **characterized in that** the bearing ring (2) has a first axial limb (13) and a radial projection (16) which extends radially to the outside from the free end side of the first axial limb (13) and has a second axial limb (15) on the side which faces axially away from the first axial limb (13), the sensor holder (4) being arranged on the second axial limb (15).

## Revendications

1. Unité d'étanchéité (1), comprenant un capteur (5) et une bague de support (2) avec au moins une lèvre d'étanchéité (3) fixée sur la bague de support (2) du côté de la périphérie intérieure, dans laquelle un support de capteur (4) est disposé en complémentarité de matière et d'une seule pièce sur la bague de support (2) pour recevoir le capteur (5), dans laquelle le support de capteur (4) présente au moins un passage (8) destiné à recevoir le capteur (5), **caractérisée en ce que** le capteur (5) comprend, pour sa fixation amovible dans le support de capteur (4), au moins un élément de ressort (7) qui fixe le capteur de manière imperdable dans le support de capteur (4), et **en ce que** le support de capteur (4) présente trois passages juxtaposés (8, 9, 10), dans laquelle le premier passage (8) forme le logement pour le capteur (5), et les deuxième et troisième passages (9, 10) forment le logement pour les éléments de ressort (7) du capteur (5), dans laquelle le premier passage (8) est disposé entre le deuxième et le troisième passages (9, 10).

2. Unité d'étanchéité selon la revendication 1, **caractérisé en ce que** l'élément de ressort peut être encliqueté dans le passage (8) du support de capteur (4).

3. Unité d'étanchéité selon la revendication 1 ou 2, **caractérisée en ce que** la bague de support (2) est formée en une matière métallique.

4. Unité d'étanchéité selon l'une quelconque des revendications 1 à 3, **caractérisée en ce que** la bague de support (2) est une pièce emboutie.

5. Unité d'étanchéité selon l'une quelconque des revendications 1 à 4, **caractérisée en ce que** l'élément de ressort (7) est formé par une agrafe élastique (11).

6. Unité d'étanchéité selon la revendication 5, **caractérisée en ce que** l'agrafe élastique (11) est formée en une matière métallique.

7. Unité d'étanchéité selon l'une quelconque des revendications 1 à 4, **caractérisée en ce que** l'élément de ressort (7) est formé par un crochet à déclic (12) en matière polymère.

8. Unité d'étanchéité selon la revendication 7, **caractérisée en ce que** le crochet à déclic (12) est formé en complémentarité de matière et d'une seule pièce avec le capteur (5).

9. Unité d'étanchéité selon l'une quelconque des revendications 1 à 8, **caractérisée en ce que** la bague de support (2) présente une première branche axiale (13) et une saillie radiale (16), s'étendant radialement vers l'extérieur à partir de la face frontale libre de la première branche axiale (13), et qui présente une deuxième branche axiale (15) sur la face située axialement à l'opposé de la première branche axiale (13), dans laquelle le support de capteur (4) est disposé sur la deuxième branche axiale (15).
